# EUROPÄISCHE PATENTSCHRIFT

(11) **EP 0 867 406 B1**
(45) Veröffentlichungstag und Bekanntmachung des Hinweises auf die Patenterteilung: **19.07.2000**
(21) Anmeldenummer: 98100588.7
(22) Anmeldetag: 15.01.1998
(51) Int. Cl.: C01B 39/02

(54) **Herstellung eines Fe- oder Mn-ausgetauschten Zeolithen**
Preparation of a Fe- or Mn-exchanged zeolite
Préparation d'une zéolithe modifiée par échange d'ions Fe ou Mn

(30) Priorität: 26.03.1997 DE 19712727
(43) Veröffentlichungstag der Anmeldung: 30.09.1998
(73) Patentinhaber: DORNIER GmbH, 88039 Friedrichshafen (DE)
(72) Erfinder: Plog, Carsten, Dr.rer.nat., 88677 Markdorf (DE); Goeman, Volker, 88048 Friedrichshafen (DE); Andorf, Renato, Dr.rer.nat., 88074 Meckenbeuren (DE); Schüth, Ferdi, Prof. Dr.rer.nat., 61440 Oberursel (DE)
(74) Vertreter: Meel, Thomas

(56) Entgegenhaltungen:
- US-A- 5 451 387
- DATABASE WPI Section Ch, Week 8347 Derwent Publications Ltd., London, GB; Class E36, AN 83-824421 XP002069797 & JP 58 177 151 A (HITACHI LTD)

## Beschreibung

Die Erfindung betrifft ein Verfahren zur Herstellung eines Fe- oder Mn-ausgetauschten Zeolithen nach dem Oberbegriff des Patentanspruchs.

Metallionenausgetauschte Zeolithe werden in der Regel durch Flüssigphasenionenaustausch hergestellt. Hierzu wird die Ammonium- oder Na-Form des entsprechenden Zeolithen in einer Metallsalzlösung des einzutauschenden Metalls suspensiert und für 2-72h bei Raumtemperatur oder auch Rückfluß gerührt. Hiernach wird der Zeolith abfiltriert und gewaschen.

Voraussetzung für diese Vorgehensweise ist, daß das Metall in einer löslichen Verbindung und, vorteilhaft, niedrigen Wertigkeit vorliegt z.B. Cu²⁺, Co²⁺. Ebenso sollte die Austauschlösung keinen zu niedrigen pH-Wert aufweisen, da ansonsten Protonen statt des Metallions eingetauscht werden, gleichfalls kann es zur Dealuminierung des Zeolithen und damit letztlich zu seiner Zerstörung kommen.

Will man durch Flüssigphasenionenaustausch Eisen in einen Zeolithen einbringen, so wird eine lösliche Eisen (II) salzlösung verwendet und hierin der Zeolithen suspendiert. Hierbei ist auf vollständige Abwesenheit von Sauerstoff zu achten, da ansonsten das eingesetzte Fe²⁺ zu Fe³⁺ oxidiert wird und das gebildete Eisen (III) als Hydroxid ausfällt. Selbst Spuren von Fe³⁺ Oxid/Hydroxid auf der Oberfläche eines Zeolithen vermögen die katalytischen Eigenschaften des erhaltenen Katalysators zu bestimmen und machen den eisenausgetauschten Zeolithen unbrauchbar (J. Leglise, J.O. Petunchi und W.K. Hall, Journal of Catalysis **8 6**, 1984, S. 392 - 399). Hinzu kommt, daß die erhaltenen Katalysatoren nur schwierig zu reproduzieren sind. Senkt man den pH-Wert in der Reaktionslösung soweit ab, daß kein Fe³⁺ Oxid/Hydroxid ausfallen kann, kommt es zu oben genannten Problemen.

Eine zweite Möglichkeit, Eisen in einen Zeolithen einzutauschen, ist der Festkörperionenaustausch (K. Lázár, G. Pál-Borbély, H.K. Beyer und H.G. Karge, Preparation of Catalysts IV, Studies in Surface Science and Catalysis **91**, 1995, S. 551-559). Hierbei wird der Zeolith (meist in seiner Na- oder NH₄-Form) mit einem Salz des einzutauschenden Metalls vermörsert. Hiernach wird das Zeolith/Salz Gemisch in einem Ofen, gewöhnlich unter Schutzgasatmosphäre, bei erhöhter Temperatur zur Reaktion gebracht. Die nach diesem Verfahren erzielten Austauschgrade liegen jedoch unter denen, die nach dem Prinzip des wäßrigen Austausches erhalten werden. Auch muß hierbei (insbesondere beim Eisen) unter Inertgasatmosphäre gearbeitet werden, um eine Zersetzung des eingesetzten Salzes zu verhindern. Vor allem muß auf völlige Abwesenheit von H₂O geachtet werden, was kaum möglich ist. Die durch den Festkörperionenaustausch erhaltenen ausgetauschten Zeolithe unterscheiden sich in ihrer katalytischen Aktivität von denen, die durch Flüssigphasenaustausch erhalten werden. Ähnlich wie beim Flüssigphasenionenaustausch ist der Festphasenionenaustausch zur Gewinnung von eisenausgetauschten Zeolithen aufwendig und schwierig zu reproduzieren.

Die hier gemachten Betrachtungen lassen sich auf die Präparation von manganausgetauschten Zeolithen übertragen. Bei der Präparation mit Mangan unter Verwendung von Mn (II) Salzen kommt es bei Anwesenheit von Sauerstoff zur Bildung von Manganoxiden/Manganhydroxiden mit ganz ähnlicher Problematik, wie beim Eisen beschrieben.

Aufgabe der Erfindung ist es deshalb, ein Verfahren anzugeben, mit dem Fe- oder Mn-ausgetauschte Zeolithen mit geringem Aufwand hergestellt werden können, wobei die erhaltenen Katalysatoren problemlos reproduziert werden können.

Diese Aufgabe wird mit dem Gegenstand des Patentanspruch 1 gelöst.

Erfindungsgemäß wird beim Flüssigphasenionenaustausch von Eisen (II)-Salzen in Zeolithe ein Reduktionsmittel zugegeben, das Eisen (III), welches durch Sauerstoffkontaminationen gebildet wird, wieder zum Eisen (II) reduziert. Voraussetzung hierfür ist, daß das Reduktionsmittel ein Potential kleiner dem von Fe²⁺ 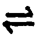 Fe³⁺ + e⁻ (E° = +0,77 V) aufweist. Die betrachteten Potentiale hängen dabei stark von den Bedingungen im Milieu (Konzentration, pH-Wert, Temperatur, Komplexbildner etc.) ab. Weiterhin muß die Geschwindigkeit der Fe³⁺-Reduktion durch das Reduktionsmittel ausreichend groß sein.

Vorteilhaft ist es, wenn das Reduktionsmittel in dem Reaktionsmedium gelöst werden kann und den lonenaustausch nicht behindert.

Entsprechendes gilt für das System Mn²⁺/Mn³⁺ /Mn⁴⁺.

Als Reduktionsmittel können z.B. folgende Stoffe verwendet werden: lodid, Hydrazin, Hydrazinderivate, Ascorbinsäure, Ascorbinsäurederivate, Hydrochinon, Hydrochinondevirate, verschiedene Zucker (z.B. Glucose, Gluconat), Wasserstoff, Oxalsäure, Citronensäure, Apfelsäure, Weinsäure, Glykolsäure, Alkohole, Zink, Zinn(II), Titan(III), Thiosulfat, Hyposulfit, Sulfit, Schwefeldioxid, Schwefelwasserstoff, Formaldehyd, Eisen elementar, etc.

Als auszutauschende Zeolithen werden z.B.ein ZSM5, Mordenit, USY,Y verwendet, die z.B. in der Na-Form, NH₄-Form.

### Vorteile der Erfindung

- Die Präparation von eisenausgetauschten Zeolithen war bisher nur unter aufwendigen, anaeroben Bedingungen z.B. in eine Glovebox unter Inertgas möglich. Die erhaltenen Katalysatoren konnten nur in kleinen Mengen erhalten werden und waren schwierig zu reproduzieren. Durch das erfindungsgemäße Verfahren lassen sich die gewünschten Katalysatoren auf sehr einfache Weise erhalten.
- Die erhaltenen Katalysatoren sind problemlos zu reproduzieren.
- Die Erfindung ermöglicht den Zugang zu Fe-Zeolith-Katalysatoren für z.B. die DeNOx-Reaktion, N₂O-Reduktion oder auch Synthesen in der organischen Chemie, z.B. der direkten Oxidation von Benzol zu Phenol.

### Beispiel 1

Wäßriger loneneintausch in Na-ZSM5, Modul 27 (Hersteller: VAW, Deutschland)
maximaler Eintausch 3,11 ma.-% Fe²⁺.

100 g Na-ZSM5 (Modul 27) werden in einem Liter H₂O aufgeschlämmt und unter Ruckfluß (Rückfluß: siedende Flüssigkeit mit aufgesetztem Kühler, der einen Flüssigkeitsverlust infolge Verdampfens verhindert) eine Stunde gerührt. Hiernach werden 10g Ascorbinsäure zugegeben und 5 min später 22,14 g (0,111 mol) FeCl₂ * 4H₂O. Der pH-Wert in der Lösung beträgt etwa 1,9. Die Reaktionslösung wird nun unter Rückfluß 24h gerührt. Danach wird der Zeolith abfiltriert und gewaschen. Der eisenausgetauschte Zeolith ist von hellgrüner Farbe. Der Austauschgrad beträgt ca. 100 % auf der Basis, daß zwei Na⁺ gegen ein Fe²⁺ ausgetauscht werden. Der erhaltene Fe-ZSM5 kann problemlos weiterverarbeitet werden. Durch Zugabe von NaOH oder NH₃ läßt sich der pH-Wert bis auf ca. pH 6,5 steigern, ohne daß Fe(OH)₂ ausfällt. Hierdurch läßt sich durch Generierung von Fe(OH)⁺-Ionen der Eintauschgrad auf bis zu 200 % steigern (Austausch ein Na⁺ gegen ein Fe(OH)⁺). Niedrigere Austauschgrade erhält man problemlos, indem weniger Fe-Salz eingesetzt wird.

### Beispiel 2

Wäßriger loneneintausch in Na-Mordenit, Modul 10 (Hersteller: Conteka-PQ Zeolites B.V., Niederlande)
maximaler Eintausch 8,52 ma.-% Fe²⁺.

50 g Na-Mordenit (Modul 10) werden in einem Liter H₂O aufgeschlämmt und unter Rückfluß eine Stunde gekocht. Hiernach werden 20 g Ascorbinsäure zugegeben und 5 min später 44,28 g (0,222 mol) FeCl₂ * 4H₂O. Der pH-Wert in der Lösung beträgt etwa 1,8. Die Reaktionslösung wird nun unter Rückfluß 24 h gerührt. Danach wird der Zeolith abfiltriert und gewaschen. Der eisenausgetauschte Zeolith ist von hellgründer Farbe. Der Austauschgrad beträgt ca. 100% auf der Basis, daß zwei Na⁺ gegen ein Fe²⁺ ausgetauscht werden. Der erhaltene Fe-Mordenit kann problemlos weiterverarbeitet werden.

### Beispiel 3

Wäßriger Ioneneintausch in Na-ZSM5, Modul 27 (Hersteller: VAW)
maximaler Eintausch 3,11 ma.-% Fe²⁺.

12g L-Ascorbinsäure werden in einem Liter Wasser gelöst. Hierzu werden 15,4g Eisen(II)sulfat-Heptahydrat gegeben (0,055 molare Lösung Fe²⁺). Zu der Lösung werden nun 50g Na-ZSM5, Modul 27, gegeben. Die erhaltene Suspension wird zehn Stunden unter Rückfluß gerührt. Hiernach wird die Suspension abfiltriert oder abzentrifugiert und mit Wasser gewaschen. Der erhaltene Fe-ZSM5 hat einen Eisengehalt von ca. 3,11 ma.-%. Der Fe-ZSM5 kann problemlos weiterverarbeitet werden.

### Beispiel 4

Wäßriger Ioneneintausch in Na-ZSM5, Modul 27 (Hersteller: VAW)
maximaler Eintausch 3,11 ma.-% Fe²⁺.

12g L-Ascorbinsäure werden in einem Liter Wasser gelöst. Hierzu werden 15,4g Eisen(II)sulfat-Heptahydrat gegeben (0,055 molare Lösung Fe²⁺). Zu der Lösung werden nun 50g Na-ZSM5, Modul 27, gegeben. Die erhaltene Suspension wird 30 Stunden bei 50°C gerührt. Hiernach wird die Suspension abfiltriert oder abzentrifugiert und mit Wasser gewaschen. Der erhaltene Fe-ZSM5 hat einen Eisengehalt von ca. 3,11 ma.-%. Der Fe-ZSM5 kann problemlos weiterverarbeitet werden.

### Beispiel 5

Wäßriger Ioneneintausch in Na-ZSM5, Modul 27 (Hersteller: VAW)
maximaler Eintausch 3,11 ma.-% Fe²⁺.

12g L-Ascorbinsäure werden in einem Liter Wasser gelöst. Hierzu werden 10,9g Eisen(II)chlorid-Tetrahydrat gegeben (0,055 molare Lösung Fe²⁺). Zu der Lösung werden nun 50g Na-ZSM5, Modul 27, gegeben. Die erhaltene Suspension wird zehn Stunden unter Rückfluß gerührt. Hiernach wird die Suspension abfiltriert oder abzentrifugiert und mit Wasser gewaschen. Der erhaltene Fe-ZSM5 hat einen Eisengehalt von ca. 3,11 ma.-%. Der Fe-ZSM5 kann problemlos weiterverarbeitet werden.

### Beispiel 6

Wäßriger Ioneneintausch in Na-ZSM5, Modul 55 (Hersteller: VAW)
maximaler Eintausch 1,6 ma.-% Fe²⁺.

12g L-Ascorbinsäure werden in einem Liter Wasser gelöst. Hierzu werden 10,9g Eisen(II)chlorid-Tetrahydrat gegeben (0,055 molare Lösung Fe²⁺). Zu der Lösung werden nun 50g Na-ZSM5, Modul 55, gegeben. Die erhaltene Suspension wird zehn Stunden unter Rückfluß gerührt. Hiernach wird die Suspension abfiltriert oder abzentrifugiert und mit Wasser gewaschen. Der erhaltene Fe-ZSM5 hat einen Eisengehalt von ca. 1,6 ma.-%. Der Fe-ZSM5 kann problemlos weiterverarbeitet werden.

### Beispiel 7

Wäßriger Ioneneintausch in Na-ZSM5, Modul 55 (Hersteller: VAW)
50%iger Eintausch 0,78 ma.-% Fe²⁺.

12g L-Ascorbinsäure werden in einem Liter Wasser gelöst. Hierzu werden 15,4g Eisen(II)chlorid-Tetrahydrat gegeben (0,0077 molare Lösung Fe²⁺). Zu der Lösung werden nun 50g Na-ZSM5, Modul 55, gegeben. Die erhaltene Suspension wird zehn Stunden unter Rückfluß gerührt. Hiernach wird die Suspension abfiltriert oder abzentrifugiert und mit Wasser gewaschen. Der erhaltene Fe-ZSM5 hat einen Eisengehalt von ca. 0,8 ma.-%. Der Fe-ZSM5 kann problemlos weiterverarbeitet werden.

### Beispiel 8

Wäßriger Ioneneintausch in NH₄-ZSM5, Modul 27 (Hersteller: VAW)
maximaler Eintausch 3,11 ma.-% Fe²⁺.

12g L-Ascorbinsäure werden in einem Liter Wasser gelöst. Hierzu werden 10,9g Eisen(II)chlorid-Tetrahydrat gegeben (0,055 molare Lösung Fe²⁺). Zu der Lösung werden nun 50g NH₄-ZSM5, Modul 27, gegeben. Die erhaltene Suspension wird zehn Stunden unter Rückfluß gerührt. Hiernach wird die Suspension abfiltriert oder abzentrifugiert und mit Wasser gewaschen. Der erhaltene Fe-ZSM5 hat einen Eisengehalt von ca. 3,11 ma.-%. Der Fe-ZSM5 kann problemlos weiterverarbeitet werden.

### Beispiel 9

Wäßriger loneneintausch in NH₄-Mordenit, Modul 28,4 (Hersteller: Conteka-PQ Zeolites B.V.)
maximaler Eintausch 3,0 ma.-% Fe²⁺.

12g L-Ascorbinsäure werden in einem Liter Wasser gelöst. Hierzu werden 10,9g Eisen(II)chlorid-Tetrahydrat gegeben (0,055 molare Lösung Fe²⁺). Zu der Lösung werden nun 50g NH₄-Mordenit, Modul 28,4, gegeben. Die erhaltene Suspension wird zehn Stunden unter Rückfluß gerührt. Hiernach wird die Suspension abfiltriert oder abzentrifugiert und mit Wasser gewaschen. Der erhaltene Fe-Mordenit hat einen Eisengehalt von ca. 3,0 ma.-%. Der Fe-Mordenit kann problemlos weiterverarbeitet werden.

### Beispiel 10

Wäßriger loneneintausch in Na-Y Zeolith, Modul 4,5-4,8 (Hersteller: Bayer AG, Deutschland, CP 190)
maximaler Eintausch ca. 12,2 ma.-% Fe²⁺.

12g L-Ascorbinsäure werden in einem Liter Wasser gelöst. Hierzu werden 32,57g Eisen(II)chlorid-Tetrahydrat gegeben (0,164 molare Lösung Fe²⁺). Zu der Lösung werden nun 50g Na-Y, Modul 4,5-4,8, gegeben. Die erhaltene Suspension wird 20 Stunden unter Rückfluß gerührt. Hiernach wird die Suspension abfiltriert oder abzentrifugiert und mit Wasser gewaschen. Der erhaltene Fe-Y hat einen Eisengehalt von ca. 12 ma.-%. Der Fe-Y kann problemlos weiterverarbeitet werden.

### Beispiel 11

Überaustausch durch Anhebung des pH-Wertes und damit Bereitstellung von Fe(OH)⁺
Wäßriger loneneintausch in Na-ZSM5, Modul 27 (Hersteller: VAW) maximaler Eintausch 6,22 ma.-% Fe²⁺.

12g L-Ascorbinsäure werden in einem Liter Wasser gelöst. Hierzu werden 50g Eisen(ll)chlorid-Tetrahydrat gegeben (0,25 molare Lösung Fe²⁺). Zu der Lösung werden nun 50g Na-ZSM5, Modul 27, gegeben. Hierauf wird konzentrierte Ammoniaklösung (25%-ig) oder 1molare NaOH-Lösung zugetropft, bis die Lösung einen pH-Wert von 6,4 aufweist. Die erhaltene Suspension wird 48 Stunden unter Rückfluß gerührt. Hiernach wird die Suspension abfiltriert oder abzentrifugiert und mit Wasser gewaschen. Der erhaltene Fe-ZSM5 hat einen Eisengehalt von ca. 6,2 ma.-%. Der Fe-ZSM5 kann problemlos weiterverarbeitet werden.

### Beispiel 12

Überaustausch durch Anhebung des pH-Wertes und damit Bereitstellung von Fe(OH)⁺
Waßriger loneneintausch in NH4-ZSM5, Modul 27 (Hersteller: VAW)
maximaler Eintausch 6,22 ma.-% Fe²⁺.

12g L-Ascorbinsäure werden in einem Liter Wasser gelöst. Hierzu werden 50g Eisen(II)chlorid-Tetrahydrat gegeben (0,25 molare Lösung Fe²⁺). Zu der Lösung werden nun 50g NH₄-ZSM5, Modul 27, gegeben. Hierauf wird konzentrierte Ammoniaklösung (25%-ig) oder 1molare NaOH-Lösung zugetropft, bis die Lösung einen pH-Wert von 6,4 aufweist. Die erhaltene Suspension wird 48 Stunden unter Rückfluß gerührt. Hiernach wird die Suspension abfiltriert oder abzentrifugiert und mit Wasser gewaschen. Der erhaltene Fe-ZSM5 hat einen Eisengehalt von ca. 6,2 ma.-%. Der Fe-ZSM5 kann problemlos weiterverarbeitet werden.

### Beispiel 13

Überaustausch durch Anhebung des pH-Wertes und damit Bereitstellung von Fe(OH)⁺
Wäßriger loneneintausch in Na-Mordenit Modul, 28,4 (Hersteller: Conteka-PQ-Zeolites B.V.)
maximaler Eintausch 5,9 ma.-% Fe²⁺.

12g L-Ascorbinsäure werden in einem Liter Wasser gelöst. Hierzu werden 50g Eisen(II)chlorid-Tetrahydrat gegeben (0,25 molare Lösung Fe²⁺). Zu der Lösung werden nun 50g Na-Mordenit, Modul 28,4, gegeben. Hierauf wird konzentrierte Ammoniaklösung (25%-ig) oder 1molare NaOH-Lösung zugetropft, bis die Lösung einen pH-Wert von 6,4 aufweist. Die erhaltene Suspension wird 48 Stunden unter Rückfluß gerührt. Hiernach wird die Suspension abfiltriert oder abzentrifugiert und mit Wasser gewaschen. Der erhaltene Fe-Mordenit hat einen Eisengehalt von ca. 6,2 ma.-%. Der Fe-Mordenit kann problemlos weiterverarbeitet werden.

### Beispiel 14

Überaustausch durch Anhebung des pH-Wertes und damit Bereitstellung von Fe(OH)⁺
Wäßriger Ioneneintausch in Na-Mordenit, Modul 28,4 (Hersteller: Conteka-PQ-Zeolithes B.V.)
maximaler Eintausch 5,9 ma.-% Fe²⁺.

Durch Verwendung von Eisen(II)Ascorbat oder Eisen(II)Gluconat kann die benötigte Menge Ammoniaklösung deutlich verringert werden, da bereits das Ascorbat- bzw. Gluconat-Anion eine deutliche Pufferwirkung aufweist. Das Gluconat wirkt hierbei in gleicher Weise als Reduktionsmittel und verhindert die Bildung von Eisen(III)Oxyhydrat bzw. Eisen(III)Hydroxid. Auf den Einsatz von Ascorbinsäure kann somit verzichtet werden.

### Präparationsvorschrift:

50g Eisen(II)-L-Ascorbat (FeC₁₂H₁₄O₁₂) werden in einem Liter Wasser gelöst. Hierzu werden 25g Eisen(II)chlorid-Tetrahydrat gegeben (0,25 molare Lösung Fe²⁺). Zu der Lösung werden nun 50g Na-Mordenit, Modul 28,4, gegeben.

Hierauf wird konzentrierte Ammoniaklösung (25%-ig) oder 1molare NaOH-Lösung zugetropft, bis die Lösung einen pH-Wert von 6,4 aufweist. Die erhaltene Suspension wird 48 Stunden unter Rückfluß gerührt. Hiernach wird die Suspension abfiltriert oder abzentrifugiert und mit Wasser gewaschen. Der erhaltene Fe-Mordenit hat einen Eisengehalt von ca. 6,2 ma.-%. Der Fe-Mordenit kann problemlos weiterverarbeitet werden.

### Beispiel 15

Überaustausch durch Anhebung des pH-Wertes und damit Bereitstellung von Fe(OH)⁺
Wäßriger Ioneneintausch in Na-ZSM5, Modul 27 (Hersteller: VAW)
maximaler Eintausch 5,9 ma.-% Fe²⁺.

Durch Verwendung von Eisen(II)Ascorbat oder Eisen(II)Gluconat kann die benötigte Menge Ammoniaklösung deutlich verringert werden, da bereits das Ascorbat- bzw. Gluconat-Anion eine deutliche Pufferwirkung aufweist. Das Gluconat wirkt hierbei in gleicher Weise als Reduktionsmittel und verhindert die Bildung von Eisen(III)-Oxyhydrat bzw. Eisen(III)Hydroxid. Auf den Einsatz von Ascorbinsäure kann somit verzichtet werden.

### Präparationsvorschrift:

121g Eisen(II)Gluconat (Fe(HOCH₂(CHOH)₄CO₂)₂) werden in einem Liter Wasser gelöst. (0,25 molare Lösung Fe²⁺). Zu der Lösung werden nun 50g Na-ZSM5, Modul 27, gegeben. Hierauf wird konzentrierte Ammoniaklösung (25%-ig) oder 1 molare NaOH-Lösung zugetropft, bis die Lösung einen pH-Wert von 6,4 aufweist. Die erhaltene Suspension wird 48 Stunden unter Rückfluß gerührt. Hiernach wird die Suspension abfiltriert oder abzentrifugiert und mit Wasser gewaschen. Der erhaltene Fe-ZSM5 hat einen Eisengehalt von ca. 6,22 ma.-%. Der Fe-ZSM5 kann problemlos weiterverarbeitet werden.

### Beispiel 16

Ähnlich wie beim System Eisen(II)/Eisen(III) kann Ascorbinsäure (Vitamin C) auch im System Mangan(II)/Mangan(IV) als Redoxpuffer wirken und die Bildung von Mangan(IV) verhindern. Durch Anhebung des pH-Wertes ist hier ebenfalls ein Überaustausch durch Erzeugung von Mn(OH)⁺ möglich.
Wäßriger loneneintausch in Na-ZSM5, Modul 27 (Hersteller: VAW)

### Präparationsvorschrift:

12g L-Ascorbinsäure werden in einem Liter Wasser gelöst. Hierzu werden 9,3g Mangan(ll)sulfat-Monohydrat gegeben (0,055 molare Lösung Mn²⁺). Zu der Lösung werden nun 50g Na-ZSM5, Modul 27, gegeben. Die erhaltene Suspension wird zehn Stunden unter Rückfluß gerührt. Hiernach wird die Suspension abfiltriert oder abzentrifugiert und mit Wasser gewaschen. Der erhaltene Mn-ZSM5 hat einen Mangangehalt von ca. 3,1 ma.-%. Der Mn-ZSM5 kann problemlos weiterverarbeitet werden.

### Beispiel 17

Ähnlich wie beim System Eisen(II)/Eisen(III) kann Ascorbinsäure (Vitamin C) auch im System Mangan(ll)/Mangan(IV) als Redoxpuffer wirken und die Bildung von Mangan(IV) verhindern. Durch Anhebung des pH-Wertes ist hier ebenfalls ein Überaustausch durch Erzeugung von Mn(OH)⁺ möglich.
Wäßriger loneneintausch in Na-ZSM5, Modul 27 (Hersteller: VAW)

### Präparationsvorschrift:

12g L-Ascorbinsäure werden in einem Liter Wasser gelöst. Hierzu werden 61,3g Mangan(II)acetat-Tetrahydrat gegeben (0,25 molare Lösung Mn²⁺). Zu der Lösung werden nun 50g Na-ZSM5, Modul 27, gegeben. Hierzu wird konzentrierte Ammoniaklösung (25%-ig) oder 1molare NaOH-Lösung getropft, bis der pH-Wert der Lösung der Lösung ca. 6 erreicht. Die erhaltene Suspension wird zehn Stunden unter Rückfluß gerührt. Hiernach wird die Suspension abfiltriert oder abzentrifugiert und mit Wasser gewaschen. Der erhaltene Mn-ZSM5 hat einen Mangangehalt von ca. 6ma.-%. Der Mn-ZSM5 kann problemlos weiterverarbeitet werden.

## Patentansprüche

1. Herstellung eines Fe- oder Mn-ausgetauschten Zeolithen, indem der auszutauschende Zeolith in einer löslichen Eisen(II)salzlösung oder Mangan(II)salzlösung suspendiert wird, **dadurch gekennzeichnet**, daß die Eisen(II)salzlösung oder die Mangan(II)salzlösung ein Reduktionsmittel enthält, welches das durch Sauerstoffkontamination gebildete Eisen (III) oder Mangan(III)/Mangan(IV) zu Eisen(II) oder Mangan(II) reduziert.

## Claims

1. Preparation of an Fe- or Mn-exchanged zeolite, by suspending the zeolite to be exchanged in a soluble iron(II) salt solution or manganese(II) salt solution, **characterized in that** the iron(II) salt solution or the manganese(II) salt solution comprises a reducing agent which reduces the iron(III) or manganese(III)/ manganese (IV), formed as a result of oxygen contamination, to iron(II) or manganese(II).

## Revendications

1. Préparation d'une zéolite à échange au Fe ou Mn, en mettant en suspension la zéolite à échanger dans une solution de sel de fer (II) ou une solution de sel de manganèse (II) soluble, caractérisée en ce que la solution de sel de fer (II) ou la solution de sel de manganèse (II) contient un réducteur qui réduit le fer (III) ou manganèse (III)/manganèse (IV) formé par contamination à l'oxygène en fer (II) ou manganèse (II).
